# EUROPÄISCHE PATENTSCHRIFT

(11) **EP 0 800 937 B1**
(45) Veröffentlichungstag und Bekanntmachung des Hinweises auf die Patenterteilung: **09.09.1998**
(21) Anmeldenummer: 96105638.9
(22) Anmeldetag: 05.04.1996
(51) Int. Cl.: B60G 9/00, B60G 11/113, B60G 11/46

(54) **Achseinbindung**
Axle fixation
Fixation d'essieu

(43) Veröffentlichungstag der Anmeldung: 15.10.1997
(73) Patentinhaber: BPW Bergische Achsen Kommanditgesellschaft, 51674 Wiehl (DE)
(72) Erfinder: Steiner, Helmut, 51674 Wiehl (DE); Mathieu, Michael, Dipl.-Ing., 53804 Much (DE)
(74) Vertreter: Stenger, Watzke & Ring Patentanwälte

(56) Entgegenhaltungen:
- EP-A- 0 590 528
- EP-A- 0 625 440
- US-A- 3 437 333
- US-A- 3 773 347

## Beschreibung

Die Erfindung betrifft eine Achseinbindung für Luft- oder Blattfederachsen mit einem als Vierkantrohr mit abgerundeten Kanten ausgebildeten Achskörper, den Achskörper an der Ober- oder Unterseite kreuzenden Längslenkern oder Blattfedern sowie diese Konstruktionsteile unter Zwischenlage von Achsplatten, Federplatten und Füllstücken festlegenden Schraubenbolzen, vorzugsweise U-förmigen Federbügeln mit Sicherungsmuttern.

Achseinbindungen der voranstehend beschriebenen Art sind an Luftfederachsen aus der DE-U-87 16 234 bekannt. Der Achskörper ist im Abstand vor den senkrechten Mittelteilen unter den vorderen Federästen der Längslenker befestigt. Die hierfür verwendete Befestigung besteht aus am Achskörper angeschweißten Achslappen mit U-förmigem Profil, welche die Längslenker von unten her umgreifen, aus Federplatten mit U-förmigem Profil, welche die Längslenker von oben her umgreifen, aus U-förmigen Federbügeln und Sicherungsmuttern sowie aus zwischen dem Achskörper und den Federbügeln eingelegten Füllstücken. Der zwischen den beiden als Längslenker wirkenden vorderen Federästen eingespannte Achskörper übernimmt im dynamischen Fahrbetrieb die Aufgabe eines Stabilisators. Die auftretenden Torsions- und Biegemomente werden über die Schweißnähte der Achslappen auf den Achskörper übertragen. Aus diesem Grund muß die Wandstärke des Achskörpers überdimensioniert sein, um Brüche im Bereich der das Material schwächenden Schweißnähte zu vermeiden. Ein weiterer Nachteil dieser bekannten Achseinbindung besteht darin, daß für Luftfederachsen einerseits und Blattfederachsen andererseits Achskörper mit unterschiedlich geformten und angeschweißten Achslappen bevorratet werden müssen.

Um eine Achseinbindung zu schaffen, die sowohl für Luftfederachsen als auch für Blattfederachsen unabhängig davon verwendbar ist, ob die Längslenker der Luftfederachse und die Blattfedern der Blattfederachse den Achskörper an der Oberseite oder Unterseite kreuzen, ist es zur Weiterbildung der voranstehend beschriebenen Achseinbindung mit angeschweißten Achsplatten aus der EP-A1-0 590 528 bekannt, die Achsplatten an den konvex abgerundeten Kanten des Achskörpers mit entsprechend konkav geformten Druckflächen unverschweißt anzulegen und auf der Oberseite und/oder Unterseite des Achskörpers in entsprechende Ausnehmungen der Achsplatten oder Füllstücke eingreifende Ringe anzuordnen. Bei dieser bekannten Achseinbindung ist der Achskörper schweißnahtfrei mit den sich an seinen konvex abgerundeten Kanten kraft- und formschlüssig abstützenden Achsplatten verbunden, wobei die auf der Oberseite und/oder Unterseite des Achskörpers vorzugsweise durch Schweißung befestigten Ringe nur die Seitenkräfte bei Kurvenfahrt übernehmen, ohne an der Übertragung von Torsions- und Biegemomenten auf den Achskörper beteiligt zu sein.

Durch die schweißnahtfreie Einbindung des Achskörpers ergibt sich nicht nur die Möglichkeit für eine Gewichtseinsparung beim Achskörper durch Reduzierung seiner Wandstärke, sondern zusätzlich der Vorteil, daß die Achskörper sowohl für Luftfederachsen als auch für Blattfederachsen verwendet werden können, wobei die Längslenker der Luftfederachsen oder die Blattfedern der Blattfederachsen den Achskörper sowohl an der Oberseite als auch an der Unterseite kreuzen können. Hierdurch wird die Lagerhaltung vor der Endmontage erheblich reduziert.

Da die als Montagehilfe dienenden, an der Oberseite und/oder Unterseite durch Schweißen befestigten Ringe mit allseitigem Spiel in die Ausnehmung der zugehörigen Achsplatte bzw. des zugehörigen Füllstückes eingreifen, können bei hohen Belastungen und insbesondere bei großen Eckradien des Achskörpers die Achsplatten in Umfangsrichtung des Achskörpers geringfügig rutschen. Eine zur Vermeidung dieses Rutschens erfolgende Erhöhung der durch die Federbügel erzeugten Klemmkraft hätte durch die linienförmige Berührung der Achsplatten an den abgerundeten Kanten des Achskörpers eine Schädigung des Achskörpers zur Folge.

Der Erfindung liegt die **Aufgabe** zugrunde, die aus der EP-A-0 590 528 bekannte Achseinbindung zwecks Vermeidung der voranstehenden Nachteile weiterzuentwickeln.

Die **Lösung** dieser Aufgabenstellung durch die Erfindung ist dadurch gekennzeichnet, daß die in Längsrichtung des Achskörpers in bekannter Weise als Montagehilfe dienenden, mit Spiel in der jeweiligen Ausnehmung liegenden Ringe in Querrichtung hierzu als Anschlag zur Übertragung von Umfangskräften ausgebildet und nahezu spielfrei in der jeweiligen Ausnehmung angeordnet sind.

Die in Längsrichtung des Achskörpers nach wie vor als Montagehilfe dienenden Ringe stellen aufgrund der erfindungsgemäßen Weiterbildung in Querrichtung hierzu, d.h. in Umfangsrichtung des Achskörpers einen Anschlag dar, der ein Rutschen der Achsplatten bei der Übertragung von Torsions- und Biegemomenten auf den Achskörper zuverlässig verhindert und über den diejenigen Kräfte in Umfangsrichtung übertragen werden, die durch die klemmende, d.h. schweißnahtfreie Einbindung der Achsplatten, Federplatten und Füllstücke nicht übertragen werden sollten. Unter Aufrechterhaltung der schweißnahtfreien, den Achskörper durch zwischen Achsplatten und Füllstücken erzeugte Klemmkräfte einspannenden Achseinbindung wird mit der erfindungsgemäßen Weiterbildung erreicht, daß durch die Heranziehung der bisher lediglich als Montagehilfe dienenden Ringe als in Umfangsrichtung des Achskörpers wirkende Anschläge auch bei ungünstigsten Bedingungen und bei Achskörpern mit großen Eckradien ein Schädigungen des Achskörpers hervorrufendes Rutschen der Achsplatten- und Füllstücke auf dem Achskörper vermieden wird.

Um eine zuverlässige Kraftübertragung mit möglichst geringer Flächenpressung zwischen Achseinbindung und Achskörper zu erreichen, werden gemäß einem weiteren Merkmal der Erfindung die Ausnehmungen jeweils als Rechteck und die Ringe jeweils als rechteckiger Rahmen ausgebildet. Hierdurch ergibt sich nicht nur in Umfangsrichtung des Achskörpers eine Flächenberührung zwischen der Achsplatte bzw. dem Füllstück und dem als rechteckiger Rahmen ausgebildeten Ring, sondern auch eine größere Länge der Schweißnaht, mit der der Ring an seiner Innenkontur mit dem Achskörper verschweißt wird. Die rechteckige Ausbildung des Ringes ermöglicht schließlich eine definierte Trennung zwischen dem gewünschten Spiel in Längsrichtung des Achskörpers und der nahezu spielfreien Anlage in der hierzu rechtwinklig verlaufenden Richtung.

Selbstverständlich ist es auch möglich, die Ringe kreisförmig und die Aussparungen als Langloch auszubilden, um unterschiedliche Spiele in Längs- und Querrichtung zu verwirklichen.

Auf der Zeichnung ist ein Ausführungsbeispiel der erfindungsgemäßen Achseinbindung dargestellt, und zwar zeigen:
- Fig. 1: eine Draufsicht auf eine vereinfacht dargestellte Luftfederachse mit der erfindungsgemäßen Achseinbindung,
- Fig. 2: einen Querschnitt gemäß der Schnittlinie II - II in Fig. 1 durch den Achskörper mit einer Seitenansicht der für die Achseinbindung verwendeten Konstruktionsteile, wobei ein Teil der Achsplatte und der in einer Ausnehmung der Achsplatte liegende Ring im Schnitt dargestellt sind, und
- Fig. 3: eine Draufsicht auf eine auf den mit einem Ring versehenen Achskörper aufgesetzte Achsplatte.

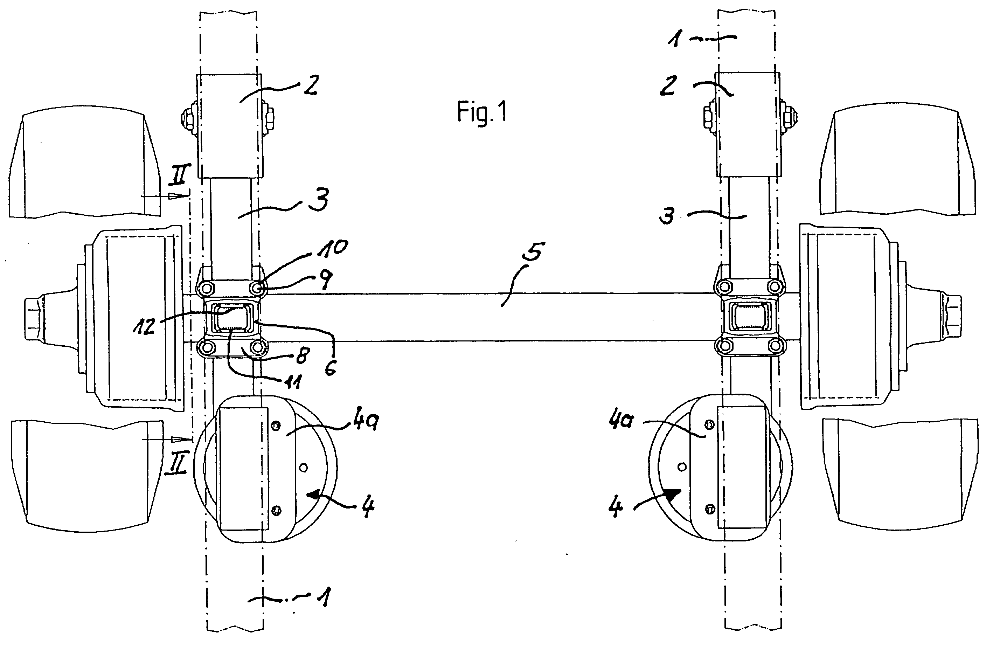

Die in Fig. 1 als Ausführungsbeispiel vereinfacht dargestellte Luftfederachse wird unter strichpunktiert dargestellten Längsträgern 1 eines im übrigen nicht gezeichneten Fahrzeuguntergestells befestigt, und zwar mittels zum Achsaggregat gehörender Konsolen 2, an denen die vorderen Enden jeweils eines Längslenkers 3 verschwenkbar gelagert sind. Auf dem hinteren Ende dieser Längslenker 3 ist jeweils eine Luftfeder 4 befestigt, deren Luftfederbalg mittels eines sogenannten Tauchkolbens auf dem Längslenker 3 abgestützt und mit seinem oberen Ende über eine Tragplatte 4a mit dem jeweiligen Längsträger 1 verbunden ist.

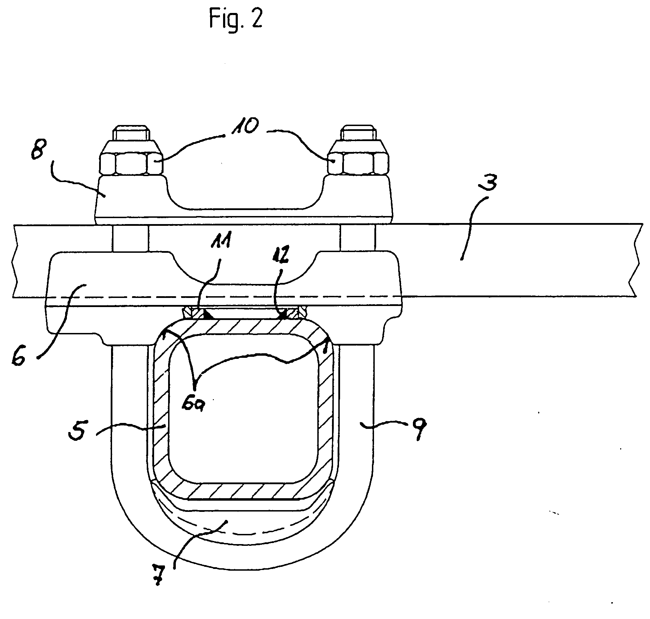

Jeder Längslenker 3 ist seinerseits über eine Achseinbindung mit einem Achskörper 5 verbunden, der gemäß Fig. 2 als Vierkantrohr mit abgerundeten Kanten ausgeführt ist. Die Achseinbindung umfaßt jeweils eine Achsplatte 6, ein Füllstück 7, eine Federplatte 8 sowie vier Schraubenbolzen, die beim Ausführungsbeispiel paarweise zu einem U-förmigen Federbügel 9 zusammengefaßt sind, auf deren Gewindeenden Sicherungsmuttern 10 aufschraubbar sind.

Beim dargestellten Ausführungsbeispiel verlaufen die Längslenker 3 an der Oberseite des Achskörpers 5. Die an der Unterseite jeweils eines Längslenkers 3 angeordneten Achsplatten 6 liegen an den konvex abgerundeten Kanten des Achskörpers 5 mit entsprechend konkav geformten Druckflächen 6a an. Die verschweißungsfreie Einspannung erfolgt durch jeweils ein an der Unterseite des Achskörpers 5 anliegendes Füllstück 7, das mit Hilfe jeweils zweier Federbügel 9 zusammen mit der Achsplatte 6 den Achskörper 5 einspannt. Zur Erzielung dieser Einspannung stützen sich die Federbügel 9 an der Oberseite des jeweiligen Längslenkers 3 mittels jeweils einer Federplatte 8 ab, an der wiederum die beiden Sicherungsmuttern 10 angreifen, wie dies die Fig. 2 zeigt.

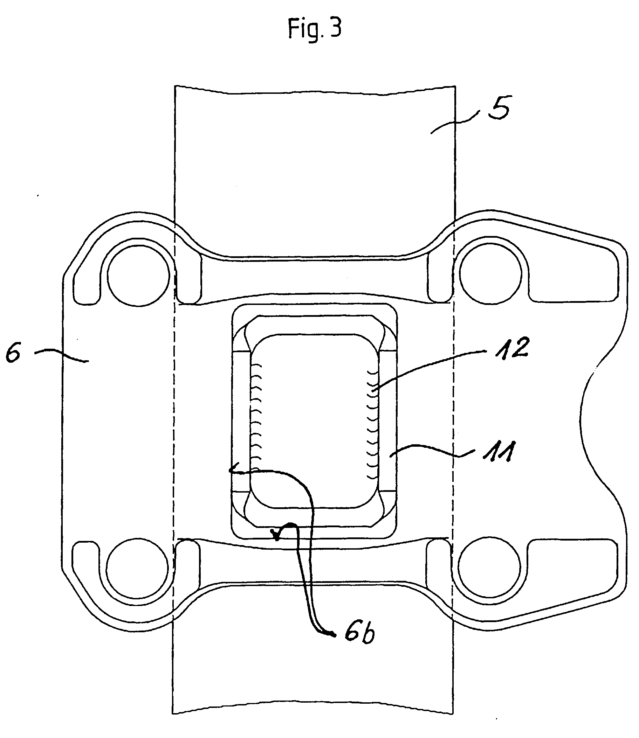

Beim dargestellten Ausführungsbeispiel ist auf der Oberseite des als Vierkantrohr ausgebildeten Achskörpers 5 ein als rechteckiger Rahmen ausgebildeter Ring 11 befestigt. Diese Befestigung erfolgt beim Ausführungsbeispiel durch eine Schweißnaht 12, die gemäß Fig. 2 als Hohlnaht zwischen der Innenkontur des rahmenförmigen Ringes 11 und der Oberseite des Achskörpers 5 ausgebildet ist. Diese Schweißnaht 12 ist deutlich in Fig. 3 zu erkennen. Diese Darstellung zeigt weiterhin, daß der rechteckige Ring 11 in einer ebenfalls rechteckigen Ausnehmung 6b der Achsplatte 6 liegt. Um bei der Herstellung sowohl des Achsaggregats als auch des Fahrzeuguntergestells unvermeidbare Fertigungstoleranzen beim Anbau der Luftfederachse an das Fahrzeuguntergestell ausgleichen zu können, sind der Ring 11 und die Ausnehmung 6b in der Achsplatte 6 derart dimensioniert, daß sich in Längsrichtung des Achskörpers 5 ein in Fig. 3 erkennbares Spiel ergibt. Dieses beträgt in der Praxis beispielsweise vier Millimeter. In Querrichtung hierzu, d.h. in Umfangsrichtung des Achskörpers 5 ist der rahmenförmige Ring 11 jedoch nahezu spielfrei in der Ausnehmung 6b der Achsplatte 6 angeordnet. Auf diese Weise ist der Ring 11 in der Lage, bei der Einleitung hoher Kräfte oder Momente als Anschlag zu dienen und ein Rutschen der Achsplatte 6 und des Füllstückes 7 auf dem Achskörper 5 und damit ein Rutschen der Achsplatte 6 und des Füllstückes 7 auf dem Achskörper 5 aufgrund einer Verdrehung der Achseinbindung um die Längsmittelachse des Achskörpers 5 zu verhindern.

### Bezugszeichenliste:

- 1: Längsträger
- 2: Konsole
- 3: Längslenker
- 4: Luftfeder
- 4a: Tragplatte
- 5: Achskörper
- 6: Achsplatte
- 6a: Druckfläche
- 6b: Ausnehmung
- 7: Füllstück
- 8: Federplatte
- 9: Federbügel
- 10: Sicherungsmutter
- 11: Ring
- 12: Schweißnaht

## Patentansprüche

1. Achseinbindung für Luft- oder Blattfederachsen mit einem als Vierkantrohr mit abgerundeten Kanten ausgebildeten Achskörper (5), den Achskörper (5) an der Ober- oder Unterseite kreuzenden Längslenkern (3) oder Blattfedern sowie diese Konstruktionsteile unter Zwischenlage von Achsplatten (6), Federplatten (8) und Füllstücken (7) festlegenden Schraubenbolzen, vorzugsweise U-förmigen Federbügeln (9) mit Sicherungsmuttern (10), wobei die Achsplatten (6) an den konvex abgerundeten Kanten des Achskörpers (5) mit entsprechend konkav geformten Druckflächen (6a) unverschweißt anlegen und auf der Oberseite und/oder Unterseite des Achskörpers (5) in entsprechende Ausnehmungen (6b) der Achsplatten (6) oder Füllstücke (7) eingreifende Ringe (11) angeordnet sind,
**dadurch gekennzeichnet,**
daß die in Längsrichtung des Achskörpers (5) in bekannter Weise als Montagehilfen dienenden, mit Spiel in der jeweiligen Ausnehmung (6b) liegende Ringe (11) in Querrichtung hierzu als Anschlag zur Übertragung von Umfangskräften ausgebildet und nahezu spielfrei in der jeweiligen Ausnehmung (6b) angeordnet sind.

2. Achseinbindung nach Anspruch 1, dadurch gekennzeichnet, daß die Ausnehmungen (6b) jeweils als Rechteck und die Ringe (11) jeweils als rechteckiger Rahmen ausgebildet sind.

3. Achseinbindung nach Anspruch 1, dadurch gekennzeichnet, daß die Ringe (11) kreisförmig und die Ausnehmungen als Langloch ausgebildet sind.

## Claims

1. Axle fixation for pneumatic or leaf spring axles, having an axle body (5), designed as a square tube with rounded-off edges, longitudinal control arms (3) or leaf springs, crossing the axle body (5) on the upper or lower side, and also screw bolts, preferably U-shaped spring clips (9) with securing nuts (10), fixing these constructional parts, with axle plates (6), spring plates (8) and filling pieces (7) interposed, the axle plates (6) bearing unwelded against the convexly rounded-off edges of the axle body (5) with correspondingly concavely shaped pressure faces (6a) and rings (11) being arranged on the upper side and/or lower side of the axle body (5), engaging in corresponding recesses (6b) of the axle plates (6) or filling pieces (7), characterized in that the rings (11), serving in a known way as assembly aids in the longitudinal direction of the axle body (5) and lying with play in the respective recess (6b), are designed in the transverse direction thereto as a stop for transferring circumferential forces and are arranged with virtually no play in the respective recess (6b).

2. Axle fixation according to Claim 1, characterized in that the recesses (6b) are respectively designed as rectangles and the rings (11) are respectively designed as rectangular frames.

3. Axle fixation according to Claim 1, characterized in that the rings (11) are designed in the form of circles and the recesses are designed as slots.

## Revendications

1. Fixation d'essieu destinée à des essieux à suspensions pneumatiques ou à lames, comportant un corps d'essieu (5) réalisé sous la forme d'un tube carré à bords arrondis, des bras longitudinaux (3) ou des ressorts à lames croisant le corps d'essieu (5) au niveau de la face supérieure ou inférieure, ainsi que des boulons filetés, de préférence des étriers élastiques (9) en forme de U avec des écrous de blocage (10), qui fixent ces éléments de construction par intercalation de plaques d'essieu (6), de plaques élastiques (8) et de cales de remplissage (7), les plaques d'essieu (6) s'appliquant sans soudure sur les bords arrondis de façon convexe du corps d'essieu (5) par des surfaces de pression (6a) de forme concave correspondante, et des bagues (11) étant disposées sur la face supérieure et/ou sur la face inférieure du corps d'essieu (5), qui s'engagent dans des évidements (6b) appropriés des plaques d'essieu (6) ou des cales de remplissage (7),
caractérisée en ce que
les bagues (11) qui, de la manière connue, servent d'auxiliaire de montage dans la direction longitudinale du corps d'essieu (5), et qui sont insérées avec du jeu dans l'évidement (6b) respectif, sont réalisées dans le sens transversal de ce dernier en tant que butée pour la transmission de forces périphériques, et sont disposées pratiquement sans jeu dans l'évidement (6b) respectif.

2. Fixation d'essieu selon la revendication 1, caractérisée en ce que les évidements (6b) sont à chaque fois réalisés en tant que rectangles et les bagues (11) en tant que cadres rectangulaires.

3. Fixation d'essieu selon la revendication 1, caractérisée en ce que les bagues (11) sont réalisées avec une forme circulaire et les évidements en tant que trous oblongs.
